Europäisches Patentamt

European Patent Office

Office européen des brevets

(11) Numéro de publication : **0 470 352 B1**

## (12) FASCICULE DE BREVET EUROPEEN

(45) Date de publication du fascicule du brevet :
**25.10.95 Bulletin 95/43**

(51) Int. Cl.⁶ : **H04K 3/00**

(21) Numéro de dépôt : **91110397.6**

(22) Date de dépôt : **24.06.91**

(54) **Procédé de transmission numérique à étalement de spectre par séquence directe à changement de séquences en cours de transmission, et émetteur et récepteur le mettant en oeuvre.**

(30) Priorité : **28.06.90 FR 9008179**

(43) Date de publication de la demande :
**12.02.92 Bulletin 92/07**

(45) Mention de la délivrance du brevet :
**25.10.95 Bulletin 95/43**

(84) Etats contractants désignés :
**CH DE ES FR GB IT LI NL SE**

(56) Documents cités :
**FR-A- 2 290 800**
**International Conference on Communications, 1980, vol. 3, June 1980, pages 5351-5355, New York, US; R.L. PICKHOLTZ et al.: "Optimization of the processing gain of an M-ary direct sequence spread spectrum communication system"**

(73) Titulaire : **ALCATEL TELSPACE**
**5, rue Noel Pons**
**F-92734 Nanterre Cédex (FR)**
(84) **DE ES FR GB IT NL SE**
Titulaire : **ALCATEL N.V.**
**Strawinskylaan 341,**
**(World Trade Center)**
**NL-1077 XX Amsterdam (NL)**
(84) **CH LI**

(72) Inventeur : **Gressier, Alain**
**116, rue Danton**
**F-92300 Levallois Perret (FR)**
Inventeur : **Sehier, Philippe**
**148, rue du Président Wilson**
**F-92300 Levallois Perret (FR)**

(74) Mandataire : **Weinmiller, Jürgen et al**
**Lennéstrasse 9**
**Postfach 24**
**D-82336 Feldafing (DE)**

## Description

La présente invention concerne les transmissions protégées de signaux numériques, en particulier les transmissions par faisceaux hertziens.

L'objet de la protection consiste à rendre la liaison résistante face à des brouilleurs ; à cet égard, l'un des modes de protection possibles bien connu, auquel se rattache l'invention, est le procédé dit d'étalement de spectre par séquence directe.

Ce procédé est par exemple décrit dans l'ouvrage de Jack K. Holmes intitulé *Coherent Spread Spectrum Systems*, a Wiley-Interscience Publication, John Wiley & Sons, 1982.

Essentiellement, il consiste à combiner les symboles d'information que l'on doit transmettre à une séquence pseudo-aléatoire à débit plus rapide, connue de l'émetteur et du récepteur. A la réception, l'opération inverse est effectuée de manière à restituer les symboles d'information initiaux utilisés à l'émission ou, à tout le moins, de manière à délivrer une estimation de ces symboles (compte tenu du bruit et du brouillage qui ont dégradé le message transmis).

Plus précisément, les symboles d'information utilisés sont des symboles complexes correspondant à une modulation d'amplitude en quadrature, et comportant donc une partie réelle et une partie imaginaire constituée chacune d'un ou plusieurs bits d'information.

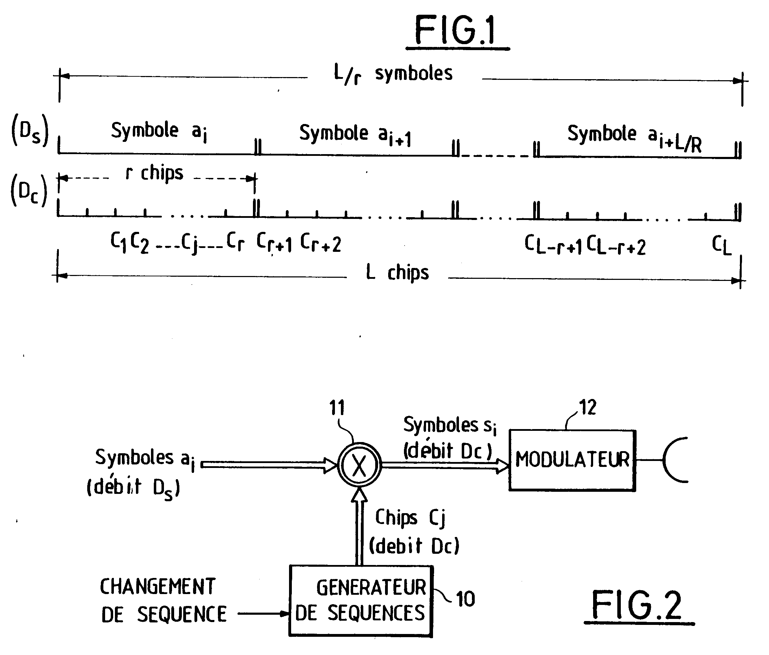

Ces symboles complexes se succèdent de façon ininterrompue sous la forme d'un train de symboles de débit $D_s$, comme illustré figure 1.

Le procédé d'étalement de spectre par séquence directe consiste à produire à l'émission, en même temps que les symboles d'information, des éléments (complexes) $C_j$, appelés dans la technique « chips », d'une séquence pseudo-aléatoire récurrente. Le débit $D_c$ des chips est supérieur au débit $D_s$ des symboles, le rapport $D_c/D_s = r$ étant appelé « gain d'étalement » (pour des raisons de commodité, on choisit généralement pour r une valeur entière). La séquence complète comprend L chips, correspondant donc à une succession de L/r symboles. Une fois la séquence des chips $C_j$ achevée, elle est immédiatement réitérée pour être combinée aux symboles suivants.

Le résultat de la combinaison entre symboles $a_i$ et chips $C_j$ sera un train de symboles $s_i$, au débit $D_c$ des chips, qui servira à moduler l'émetteur de communication.

Le passage du débit $D_s$ au débit $D_c$, supérieur, produit dans le domaine fréquentiel un étalement du spectre du signal transmis, c'est-à-dire que la bande de fréquence utilisée est r fois plus large que la bande de Nyquist correspondant à la transmission des seuls symboles d'information.

Il en résulte :
- une plus grande immunité au bruit (dans un rapport voisin du gain d'étalement),
- une excellente résistance face aux brouilleurs, qui n'agiront que sur une fraction réduite du spectre, compte tenu de l'étalement de celui-ci, et
- une moindre détectabilité (pour une même énergie transmise, celle-ci est répartie sur une bande plus large et la densité spectrale de l'émission est donc plus proche de celle du bruit).

A la réception, les symboles $s_i$ obtenus en sortie de démodulation seront soumis à l'opération inverse de celle effectuée à l'émission : on multiplie à cet effet les symboles $s_i$ reçus au débit $D_c$ par les conjugués $C_i^*$ des éléments $C_j$ de la séquence utilisée à l'émission, également produits au débit $D_c$, puis en réalisant une sommation sur r résultats successifs ; on restitue ainsi, au débit $D_s = D_c/r$, une estimation des symboles d'information initiaux $a_i$ (en l'absence de bruit et de brouilleurs, on reconstituerait exactement ces symboles).

On supposera bien entendu que l'on a préalablement retrouvé la synchronisation entre émission et réception, c'est-à-dire que l'on sait reconnaître les instants de début des symboles successifs.

Ce décodage va ramener la bande élargie à sa largeur initiale et, inversement, va étaler le brouilleur dans un rapport r (les échantillons du signal de brouilleur seront multipliés par les conjugués des éléments de la séquence), ce qui va donc diminuer fortement sa densité spectrale et donc son effet perturbateur.

Ce système procure une excellente protection à l'encontre des brouilleurs, mais il présente néanmoins l'inconvénient que, si l'on utilise de façon permanente la même séquence, on accroît les risques d'interception et d'intrusion ennemie ; tel est surtout le cas si la séquence est générée de façon simple à partir d'un petit nombre de chips élémentaires (ainsi, une séquence PN de longueur L = 1023 est générée à partir d'une clé de 10 bits seulement) : il sera alors aisé pour un ennemi d'arriver à reconstituer cette séquence et à intercepter ou corrompre la liaison.

Pour pallier ce risque, on prévoit généralement de changer de séquence d'étalement en cours de transmission.

Jusqu'à présent, dans toutes les techniques proposées à cet effet, on prévoyait d'avertir le récepteur du changement à venir, soit en interrompant la transmission des informations et en envoyant un message pour prévenir du changement de séquence, soit en utilisant un canal parallèle, distinct de celui utilisé pour la transmission des informations proprement dites, afin de transmettre au récepteur l'information de changement de séquence.

Ces solutions sont toutefois lourdes à mettre en oeuvre (nécessité d'un canal supplémentaire ou d'une liaison bidirectionnelle, gestion des ruptures de liaison, etc.), ce qui a jusqu'à présent limité leur généralisation à ce type de transmission.

L'un des buts de l'invention est de proposer un procédé de transmission à étalement de spectre et à changement de séquence permettant, avec une simple liaison unidirectionnelle, de transmettre au récepteur, en cours de transmission, des informations de changement éventuel de séquence d'étalement, sans dégrader ni interrompre cette liaison à l'instant du changement.

L'un des buts de l'invention est également de proposer un tel procédé conservant une totale transparence aux informations transmises, c'est-à-dire un procédé dans lequel on ne modifie pas le débit des informations et dans lequel on n'utilise pas, pour signaler le changement, de symboles spéciaux intercalés entre les symboles d'information proprement dits.

A cet effet, l'invention propose de procéder à un marquage intrinsèque (c'est-à-dire sans addition de symboles spéciaux) de la séquence émise ; le récepteur détectera alors le type de marquage et prendra une décision en fonction du marquage ainsi reconnu.

L'absence de recours à des symboles spéciaux présente deux avantages :
- tout d'abord, il ne sera pas nécessaire de filtrer ces symboles spéciaux dans le flux des symboles d'information reçus ; ce flux pourra donc être utilisé tel quel, sans traitement préalable spécifique ;
- en second lieu et surtout, le changement de séquence pourra être détecté à un stade très avancé du processus (par exemple directement après démodulation), ce qui permettra une action immédiate avant même que l'on n'ait procédé au décodage et au traitement du symboles.

On pourra ainsi, avec un dispositif techniquement peu complexe et une simple liaison unidirectionnelle sans aménagement particulier, procéder à des changements de séquence immédiats, intervenant à des instants aléatoires décidés par le seul émetteur et sans que rien dans la liaison (interruption, émission de signaux parallèles, etc.) ne laisse présager un changement de séquence imminent pour celui qui tenterait d'intercepter la liaison.

La sécurité de la liaison sera ainsi accrue dans de très grandes proportions, et avec un coût d'équipement tout à fait minime.

A cet effet, l'invention propose un procédé du type précité à étalement de spectre par séquence directe conforme à la revendication 1.

De préférence, les valeurs attribuées sont choisies de manière à maximiser la distance entre les deux types de marquage.

Les éléments prédéterminés de la séquence peuvent en particulier être au nombre de deux pour chaque symbole d'information. Ces deux éléments prédéterminés de la séquence peuvent alors être de valeurs opposées dans le premier cas de marquage, et de même valeur dans le second cas de marquage.

Pour déterminer le marquage, il suffit alors de calculer la somme quadratique, sur la durée de chaque symbole d'information, des distances respectives des deux éléments prédéterminés successifs apparaissant pendant cette durée, et de comparer ce résultat à un seuil prédéterminé.

L'invention concerne également un émetteur et un récepteur de signaux numériques mettant en oeuvre ce procédé.

On va maintenant décrire en détail l'invention, en référence aux figures annexées.

La figure 1, précitée, illustre la manière dont sont combinés les flux respectifs de symboles et de chips.

La figure 2 est un schéma par blocs d'un émetteur mettant en oeuvre le procédé de l'invention.

La figure 3 est un schéma par blocs d'un récepteur mettant en oeuvre le procédé de l'invention.

Sur la figure 1, comme on l'a indiqué plus haut, à chaque symbole $a_i$ correspond r chips complexes $C_j$ qui seront chacun multiplié par la valeur (complexe) du symbole correspondant présent au même instant.

Le marquage selon l'invention consistera à distinguer deux cas :
- le premier cas correspondra à une absence de changement de séquence, c'est-à-dire que la séquence suivante qui sera utilisée (après le $L^{ième}$ chip) sera la même que la séquence courante ;
- le second cas correspondra à un changement de séquence après le $L^{ième}$ chip de la séquence courante, c'est-à-dire que la séquence suivante qui sera utilisée ne sera plus la même que la séquence courante.

On peut à cet effet opérer sur la valeur de certains chips bien déterminés correspondant à chacun des symboles, par exemple les deux premiers chips $C_1$, $C_2$ de la sous-séquence de r chips correspondant au symbole $a_i$, et de même pour toutes les sous-séquences suivantes ; en d'autres termes, on va opérer sur la valeur de tous les chips complexes $C_{1+i.r}$ et $C_{2+i.r}$, avec $i \in \{0,1 ... (L/r)-1\}$.

On notera toutefois que le choix pour le marquage des deux premiers chips correspondant à chaque symbole n'est pas limitatif, et que l'on pourrait aussi bien choisir deux chips de rang quelconque prédéterminé, ou un nombre de chips supérieur à deux, etc. Toutefois, comme on l'expliquera plus loin, l'utilisation d'un nombre de chips supérieur à deux risque de dénaturer inutilement la séquence, et donc d'amoindrir l'efficacité de la transmission d'informations.

Pour le marquage, on peut notamment choisir de donner au deuxième chip correspondant à chaque symbole une valeur opposée à celle du premier, c'est-à-dire que l'on aura :

$C_{2+i,r}$ = - $C_{1+i,r}$ dans le premier cas précité ; et

$C_{2+i,r}$ = $C_{1+i,r}$ dans le second cas précité.

Ce choix retenu présente l'avantage que, en mode « normal » (absence de changement de séquence, qui est statistiquement le cas le plus fréquent), c'est la séquence du premier cas qui sera utilisée pour l'étalement et, sous sa forme conjuguée, pour le désétalement : ainsi, le marquage n'entraînera pas de diminution du pic de corrélation à la réception.

La seule diminution de ce pic aura lieu lors de la séquence précédant immédiatement le changement : en effet, à ce moment, on aura utilisé la séquence du second cas pour l'étalement mais la séquence conjuguée du premier cas pour le désétalement. Toutefois, si l'on n'utilise qu'un faible nombre de chips de marquage par rapport au nombre de chips par symbole (par exemple si l'on n'utilise que deux chips de marquage pour un gain d'étalement r = 15), la diminution du pic de corrélation sera relativement faible et le traitement de régénération du signal permettra de rétablir sans difficulté le symbole d'origine.

Le mode de marquage choisi (l'un des chips est soit l'opposé soit la copie d'un autre), bien qu'*a priori* non limitatif, et cependant particulièrement avantageux dans la mesure où il correspond à la distance euclidienne maximale entre les deux cas. Ce principe de marquage à distance maximale permet ainsi de réduire à un minimum le taux de fausses décisions engendrées par le bruit et les brouilleurs.

On voit par ailleurs que l'information de changement de séquence est très redondante, puisqu'elle est répétée sur tous les symboles d'une même séquence, soit L/r fois, ce qui lui donne une très grande résistance au bruit et aux brouilleurs (ce qui facilite également la synchronisation de la détection en réception).

Ce nombre d'occurences de l'information de changement de séquence peut être modifiée sans sortir du cadre de l'invention ; toutefois, en pratique, on constate qu'il est nécessaire que, typiquement, r soit au moins égal à 10 et que le nombre d'occurences de l'information de changement de séquence dépasse 50.

L'émetteur, illustré schématiquement figure 2, est de construction classique, avec un générateur de séquences 10 délivrant, parmi un jeu de séquences mémorisées, une séquence déterminé, appliquée à un circuit combinatoire 11 effectuant l'opération de multiplication avec les symboles à coder. La sortie de ce circuit combinatoire 11 constitue le signal numérique appliqué en entrée du modulateur d'émission 12.

Par rapport à un émetteur classique à changement de séquence comportant un jeu de q séquences, l'émetteur de l'invention dispose d'un nombre double 2q de séquences, à savoir q séquences portant le marquage précité du premier cas et q séquences, homologues des précédentes, portant le marquage du second cas.

Avant chaque changement de séquence, l'émetteur utilisera une séquence marquée selon le second cas, puis passera à la nouvelle séquence.

Si nécessaire, on peut prévoir un « temps de garde » permettant de laisser le temps au récepteur de prendre certaines actions avant le changement de séquence.

Dans ce cas, avant de changer de séquence, on utilisera d'abord une séquence marquée selon le second cas (pour prévenir le récepteur du prochain changement de séquence), puis une ou plusieurs séquences semblables mais marquées selon le premier cas (correspondant au temps de garde), puis on passera à la nouvelle séquence.

L'enchaînement des séquences est déterministe, les q séquences s'enchaînant selon un ordre prédéfini, par exemple un bouclage circulaire, c'est-à-dire que, après la séquence $S_p$ on utilise la séquence $S_{f(p)}$, avec f(p) = (p+1) modulo q.

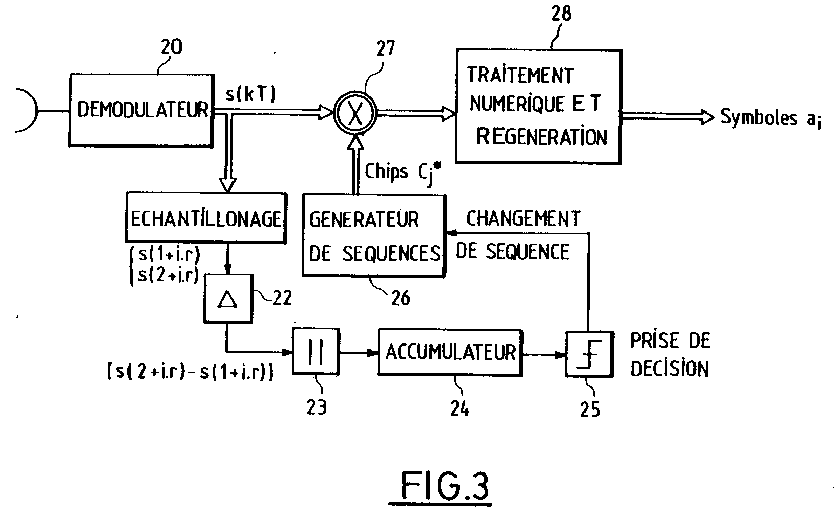

A la réception (figure 3), on examinera les échantillons séquentiels successifs, reçus au débit $D_c$ en sortie du démodulateur 20. Ces échantillons séquentiels sont de la forme :

$$s(kT) = \sum_i a_i \cdot \sum_{j=0}^{r-1} C_{i,r+j} \, h(kT-(ir+j)T) \; + \; N(kT) \; + \; J(kT)$$

T étant la période d'échantillonnage,

$a_i$ étant le symbole d'information utilisé à l'émission,

$C_{i,r+j}$ étant le chip courant ayant servi à l'étalement,

4

h(t) étant la réponse impulsionnelle de l'ensemble de la chaîne de transmission (prenant en compte tous les filtrages, retards, etc.)

N(kT) étant l'échantillon résultant du bruit additif, et

J(kT) étant l'échantillon résultant de l'émission du brouilleur.

Pour reconnaître le marquage, on va extraire au moyen du circuit 21 les échantillons correspondant aux seuls chips marqués, c'est-à-dire lorsque k prend les valeurs $(1+ i.r)$ et $(2+ i.r)$.

Ce traitement va être de type diiférentiel afin de s'affranchir de l'incidence du changement de symbole $a_i$ qui intervient tout les r chips.

Le circuit 22 va alors calculer la différence complexe $s(2+i.r) - s(1+i.r)$, et le circuit 23 va ensuite calculer le module $\| s(2+i.r) - s(1+i.r) \|$ de cette différence complexe.

L'accumulateur 24 va ensuite procéder à la sommation quadratique des modules ainsi calculés sur l'ensemble des symboles correspondant à une même séquence.

On obtient en sortie une variable :

$$v = \sum_{i=0}^{(L/r)-1} \| s(2+i.r) - s(1+i.r) \|^2$$

qui sera la variable de décision de changement éventuel de séquence de codage.

Cette variable peut encore s'écrire :

$$= \sum_{i=0}^{(L/r)-1} \| s(m+1) - s(m) \|^2 \qquad (\text{avec } m = i.r + 1)$$

$$= \sum_{i=0}^{(L/r)-1} \| a_i.(C_{m+1}-C_m) + (N(m+1) - N(m)) + (J(m+1) - J(m)) \|^2$$

$$= \sum_{i=0}^{(L/r)-1} \| a_i.(C_{m+1}-C_m) + (N(m+1)-N(m)) + J_0.(e^{j\Omega(m+1)T}-e^{j\Omega mT}) \|^2$$

$\Omega$ étant la fréquence du brouilleur (on suppose que l'on se place dans le cas d'un brouilleur à porteuse pure, et on suppose également que les termes d'intersymbole sont nuls, c'est-à-dire que l'on a : $h((m-n)T)=\delta_{mn}$.

Cette variable de décision n'est pas la seule possible, et l'invention n'est pas limitée à ce choix. En particulier, si l'on voulait privilégier la résistance au bruit plus que la résistance aux brouilleurs, on pourrait choisir une variable de décision différente, plus performante.

L'espérance mathématique E[v] de cette variable de décision v peut être majorée de la façon suivante, $N_0$ étant la densité spectrale de puissance du bruit gaussien en bande de base. :

$$E[v] = [1/((L/r)-1)] . \sum_{m} \| s(m+1) - s(m) \|^2$$

$$\leq \alpha . (E[\|(C_{m+1}-C_m)\|^2] + 4N_0 + J_0.2.\sin(\Omega T/2))$$

La prise de décision (changement de séquence ou non) sera opérée par un circuit 25 effectuant la comparaison de E[v] avec un seuil correspondant à cette majoration.

Ce circuit 25 commandera le changement éventuel de séquence du circuit générateur de séquence 26, qui contient un jeu de q séquences différentes, qui sont identiques à celle contenues dans le générateur 10 de l'émetteur et qui se succèdent selon la même loi déterministe.

De façon en elle-même connue, la séquence délivrée sera combinée en 27 aux échantillons s(kT) issus du démodulateur, les résultats de cette combinaison étant ensuite soumis à des opérations classiques de traitement numérique, régénération, etc. dans le circuit 28.

On notera que, en variante et sans sortir du cadre de l'invention, au lieu d'utiliser pour le critère de décision la différence des modules des échantillons marqués, on pourrait utiliser la différence des phases de ces mêmes échantillons. Toutefois, une telle manière de procéder présente une moindre efficacité face aux brouilleurs.

Également en variante, au lieu de prendre la décision en aval du module accumulateur 24, c'est-à-dire en attendant que les échantillons marqués correspondant aux L/r symboles successifs d'une même séquence aient été analysés, on peut envisager de prendre une décision intermédiaire avant sommation complète, c'est-à-dire en ne se basant que sur une partie des échantillons marqués (qui sont tous redondants) de la séquence.

## Revendications

1. Un procédé de transmission de signaux numériques constitués d'un train de symboles complexes correspondant à une modulation d'amplitude en quadrature, ce procédé étant un procédé du type à étalement de spectre par séquence directe, dans lequel :
   - à l'émission, on produit à un débit donné ($D_c$) une séquence pseudo-aléatoire d'éléments complexes successifs ($C_j$), que l'on multiplie chacun par le symbole complexe d'information ($a_i$) arrivant concurremment à un débit inférieur ($D_s$), de manière à obtenir une succession d'éléments complexes résultants ($s_i$) modulant une porteuse, et
   - à la réception, on multiplie les éléments complexes (s(kT)) obtenus en sortie de démodulation par une séquence d'éléments complexes successifs ($C_j^*$) constitués des éléments conjugués des éléments homologues utilisés à l'émission, les séquences d'émission et de réception ayant été préalablement synchronisées, et on somme sur la durée d'un symbole d'information les éléments complexes résultants se succédant sur cette durée, de manière à délivrer une estimation des symboles d'information initiaux utilisés à l'émission,

   caractérisé en ce que :
   - à l'émission, on utilise sélectivement l'une ou l'autre de deux séquences d'éléments complexes voisines, différant seulement l'une de l'autre par un marquage intrinsèque résidant dans la valeur attribuée à une pluralité d'éléments prédéterminés desdites séquences, selon que la séquence suivante qui sera utilisée sera ou non la même que la séquence courante, et
   - à la réception, on analyse les éléments complexes (s(kT)) obtenus en sortie de démodulation de manière à en déterminer le marquage, et on décide de conserver la même séquence d'éléments complexes conjugués, ou de changer de séquence, en fonction du marquage que l'on a reconnu,

   les changements successifs de séquences se produisant à des instants aléatoires, déterminés par le récepteur en fonction de la seule analyse desdits marquages, mais selon un ordre déterministe, connu intrinsèquement par le récepteur.

2. Le procédé de la revendication 1, dans lequel les valeurs attribuées sont choisies de manière à maximiser la distance entre les deux types de marquage.

3. Le procédé de la revendication 1, dans lequel lesdits éléments prédéterminés de la séquence sont au nombre de deux pour chaque symbole d'information.

4. Le procédé de la revendication 3, dans lequel les deux éléments prédéterminés de la séquence sont de valeurs opposées dans le premier cas de marquage, et de même valeur dans le second cas de marquage.

5. Le procédé de la revendication 3, dans lequel, pour déterminer le marquage, on calcule la somme quadratique, sur la durée de chaque symbole d'information, des distances respectives des deux éléments prédéterminés successifs apparaissant pendant cette durée, et on compare ce résultat à un seuil prédéterminé.

6. Un émetteur de signaux numériques mettant en oeuvre le procédé de l'une des revendications 1 à 5, comprenant :

- des moyens (10) pour produire à un débit donné ($D_c$) une séquence pseudo-aléatoire d'éléments complexes successifs ($C_j$),
- des moyens (11) pour multiplier ces éléments complexes successifs par des symboles complexes d'information ($a_j$) arrivant concurremment à un débit inférieur ($D_s$), de manière à obtenir une succession d'éléments complexes résultants ($s_i$), et
- des moyens modulateurs et émetteurs (12), alimentés par les éléments complexes résultants ainsi obtenus de manière à produire un signal à modulation d'amplitude en quadrature à partir de ces éléments,

émetteur caractérisé en ce qu'il comprend en outre :

- des moyens sélecteurs, pour utiliser l'une ou l'autre de deux séquences d'éléments complexes voisines, différant seulement l'une de l'autre par un marquage intrinsèque résidant dans la valeur attribuée à une pluralité d'éléments prédéterminés desdites séquences, selon que la séquence suivante qui sera utilisée sera ou non la même que la séquence courante.

7. Un récepteur de signaux numériques mettant en oeuvre le procédé de l'une des revendications 1 à 5, comprenant :

- des moyens récepteurs et démodulateurs (20), délivrant à partir du signal reçu une succession d'éléments complexes (s(kT)),
- des moyens (26) pour produire des séquences d'éléments complexes successifs ($C_j$*) constitués des éléments conjugués d'éléments homologues utilisés à l'émission,
- des moyens (27) pour synchroniser les séquences ainsi utilisées à la réception sur les séquences homologues utilisées à l'émission,
- des moyens pour multiplier les éléments complexes (s(kT)) obtenus en sortie de démodulation par une séquence correspondante d'éléments complexes successifs ainsi produits et synchronisés, et
- des moyens sommateurs (28), pour sommer sur la durée d'un symbole d'information les éléments complexes résultants se succédant sur cette durée, de manière à délivrer une estimation des symboles d'information initiaux utilisés à l'émission,

récepteur caractérisé en ce qu'il comprend en outre :

- des moyens (21, 22, 23, 24) pour analyser les éléments complexes (s(kT)) obtenus en sortie de démodulation de manière à en déterminer un marquage introduit à l'émission, le marquage étant résidant dans la valeur attribuée à une pluralité d'éléments prédéterminés desdites séquences et
- des moyens sélecteurs (25), commandés en fonction du marquage ainsi déterminé de manière à conserver la même séquence d'éléments complexes conjugués, ou de changer de séquence, les changements successifs de séquences se produisant à des instants aléatoires, déterminés par le récepteur en fonction de la seule analyse desdits marquages, mais selon un ordre déterministe, connu intrinsèquement par le récepteur.

## Patentansprüche

1. Verfahren zur Übertragung digitaler Signale bestehend aus einer Folge komplexer Symbole entsprechend einer Amplitudenmodulation in Phasenquadratur, wobei dieses Verfahren das Prinzip der Spektrumsspreizung durch direkte Sequenz verwendet,

- wobei auf der Sendeseite ein gegebener Durchsatz ($D_c$) einer Pseudozufallsfolge von aufeinanderfolgenden komplexen Elementen ($C_j$) erzeugt wird, die dann je mit dem komplexen Informationssymbol ($a_j$) multipliziert wird, das gleichzeitig mit einem geringeren Durchsatz ($D_s$) ankommt, so daß eine Folge komplexer resultierender Elemente ($s_i$) entsteht, mit der ein Träger moduliert wird,
- während empfangsseitig die am Ausgang des Demodulators erhaltenen komplexen Elemente (s(kT)) mit einer Folge aufeinanderfolgender komplexer Elemente ($C_j$*) multipliziert werden, die konjugierte Elemente der entsprechenden auf der Sendeseite verwendeten Elemente bilden, nachdem die Sequenzen auf der Sende- und Empfangsseite vorab synchronisiert worden sind, und wobei über die Dauer eines Informationssymbols die über diese Dauer aufeinanderfolgenden resultierenden komplexen Elemente summiert werden, so daß eine Abschätzung der ursprünglichen auf der Sendeseite verwendeten Informationssymbole geliefert wird, dadurch gekennzeichnet,
- daß auf der Sendeseite selektiv eine von zwei benachbarten komplexen Sequenzen von Elementen verwendet wird, die sich nur durch eine intrinsische Markierung unterscheiden, die in dem einer Mehrzahl von vorbestimmten Elementen der Sequenzen zugeordneten Wert liegt, je nachdem, ob die nächstfolgende verwendete Sequenz die gleiche Sequenz wie die laufende ist oder nicht,

- und daß auf der Empfangsseite die am Ausgang des Demodulators erhaltenen komplexen Elemente ($s(kT)$) hinsichtlich der Markierung analysiert werden und dann die Beibehaltung der gleichen Sequenz komplexer konjugierter Elemente oder ein Wechsel dieser Sequenz abhängig von der erkannten Markierung veranlaßt wird,

wobei die aufeinanderfolgenden Sequenzwechsel zu zufälligen Zeitpunkten erfolgen, die durch den Empfänger allein abhängig von der Analyse der Markierungen bestimmt werden, aber gemäß einer vorbestimmten Reihenfolge erfolgen, die dem Empfänger intrinsisch bekannt ist.

2. Verfahren nach Anspruch 1, bei dem die zugeteilten Werte so gewählt werden, daß die Distanz zwischen den beiden Markierungstypen maximal wird.

3. Verfahren nach Anspruch 1, bei dem zwei vorbestimmte Elemente der Sequenz für jedes Informationssymbol vorgesehen sind.

4. Verfahren nach Anspruch 3, bei dem die beiden vorbestimmten Elemente der Sequenz im ersten Markierungsfall entgegengesetzte Werte und im zweiten Markierungsfall gleiche Werte haben.

5. Verfahren nach Anspruch 3, bei dem zur Bestimmung der Markierung die quadratische Summe der jeweiligen Abstände der beiden aufeinanderfolgenden während der Dauer jedes Informationssymbols auftretenden Elemente berechnet wird und dieses Ergebnis mit einer vorbestimmten Schwelle verglichen wird.

6. Sender für digitale Signale zur Durchführung des Verfahrens nach einem der Ansprüche 1 bis 5,
- mit Mitteln (10), um eine Pseudozufallsfolge aufeinanderfolgender komplexer Elemente ($C_j$) mit einem gegebenen Durchsatz ($D_c$) zu erzeugen,
- mit Mitteln (11), um diese aufeinanderfolgenden komplexen Elemente mit komplexen Informationssymbolen ($a_l$) zu multiplizieren, die gleichzeitig mit einem geringeren Durchsatz ($D_s$) ankommen, so daß eine Folge von komplexen resultierenden Elementen ($s_l$) entsteht,
- und mit Mitteln zur Modulation und zum Aussenden (12), die die komplexen so erhaltenen resultierenden Elementen zugeführt erhalten, so daß ein Signal in Amplitudenmodulation mit Phasenquadratur ausgehend von diesen Elementen erzeugt wird,

dadurch gekennzeichnet, daß der Sender außerdem Selektionsmittel aufweist, um die eine oder die andere der beiden benachbarten komplexen Elementsequenzen zu verwenden, die sich voneinander nur durch eine intrinsische Markierung im einer Mehrzahl von vorbestimmten Elementen der Folge zugewiesenen Wert unterscheiden, je nachdem, ob die nächstfolgend zu verwendende Sequenz der laufenden Sequenz gleicht oder nicht.

7. Empfänger für digitale Signale zur Durchführung des Verfahrens nach einem der Ansprüche 1 bis 5,
- mit Empfangs- und Demodulationsmitteln (20), die aus dem Empfangssignal eine Folge komplexer Element ($s(kT)$) bilden,
- mit Mitteln (26), um Sequenzen aufeinanderfolgender komplexer Elemente ($C_j^*$) zu erzeugen, die aus zu den entsprechenden Elementen auf der Sendeseite konjugierten Elementen gebildet werden,
- mit Mitteln (27), um die so beim Empfang verwendeten Sequenzen mit den entsprechenden auf der Sendeseite verwendeten Sequenzen zu synchronisieren,
- mit Mitteln, um die am Ausgang des Demodulators erhaltenen komplexen Elemente ($s(kT)$) mit einer entsprechenden Sequenz von so erzeugten und synchronisierten aufeinanderfolgenden komplexen Elementen zu multiplizieren,
- und mit Summiermitteln (28), um über die Dauer eines Informationssymbols die über diese Dauer aufeinanderfolgenden resultierenden komplexen Elemente zu summieren, so daß ein Schätzwert für die ursprünglich auf der Sendeseite verwendeten Informationssymbole geliefert wird,

dadurch gekennzeichnet, daß der Empfänger außerdem aufweist:
- Mittel (21, 22, 23, 24), um die am Ausgang des Demodulators erhaltenen komplexen Elemente ($s(kT)$) zu analysieren und daraus eine auf der Sendeseite eingeführte Markierung zu bestimmen, die in dem einer Mehrzahl von vorbestimmten Elementen der Sequenz zugewiesenen Wert liegt,
- und Selektionsmittel (25), die abhängig von der so bestimmten Markierung gesteuert werden, um die gleiche Sequenz von konjugierten komplexen Elementen beizubehalten oder die Sequenz zu wechseln, wobei die aufeinanderfolgenden Sequenzwechsel zu zufälligen Zeitpunkten erfolgen, die vom Empfänger abhängig nur von der Analyse der Markierungen bestimmt werden, die Wechsel aber in einer vorbestimmten Reihenfolge stattfinden, die intrinsisch im Empfänger bekannt ist.

## Revendications

1. A direct sequence spread spectrum method of transmitting digital signals comprising a stream of complex symbols produced by QPSK modulation, in which method:
   - at the transmitting end, a pseudo-random sequence of successive complex elements ($C_j$) is produced at a given information rate ($D_c$) and each is multiplied by a complex information symbol ($a_i$) arriving concurrently at a lower information rate ($D_s$) to obtain a resultant sequence of complex elements ($s_i$) modulating a carrier, and
   - at the receiving end, the complex elements ($s(kT)$) obtained at the output of a demodulator are multiplied by a sequence of successive complex elements ($C_j^*$) made up of elements conjugate to homologous elements used at the transmitting end, the transmit and receive sequences having been synchronised beforehand, and over the duration of an information symbol the resulting complex elements are summed to obtain an estimate of the original information symbols used at the transmitting end,

   characterised in that:
   - at the transmitting end, one or other of two adjacent complex sequences of elements differing only with respect to intrinsic marking embodied in the value assigned to a plurality of predetermined elements of said sequences is used selectively according to whether the next sequence that will be used will or will not be the same as the current sequence, and
   - at the receiving end, the complex elements ($s(kT)$) obtained at the output of said demodulator are analysed to identify said marking and a decision is taken to retain the same sequence of conjugate complex elements or to change sequence according to the marking identified, successive changes of sequence occurring at random times determined by the receiver exclusively on the basis of analysing said markings but in accordance with a deterministic order known intrinsically by the receiver.

2. Method according to claim 1 wherein the values assigned are chosen to maximise the distance between the two types of marking.

3. Method according to claim 1 wherein there are two predetermined elements for each information symbol.

4. Method according to claim 3 wherein said two predetermined elements have opposite values in the first marking and the same value in the second marking.

5. Method according to claim 3 wherein, to identify the marking, the quadratic sum is calculated over the duration of each information symbol of the respective distances of two successive predetermined elements appearing during said duration and the result is compared with a predetermined threshold.

6. Digital signal transmitter implementing the method according to any one of claims 1 to 5 comprising:
   - means (10) for producing a pseudo-random sequence of successive complex elements ($C_j$) at a given information rate ($D_c$),
   - means (11) for multiplying said successive complex elements by complex information symbols ($a_i$) arriving concurrently at a lower information rate ($D_s$) to obtain a succession of resultant complex elements ($s_i$), and
   - modulator and transmitter means (12) fed with the resultant complex elements to produce a QPSK modulated signal from said elements,

   transmitter characterised in that it further comprises:
   - selector means for using one or other of two adjacent complex element sequences differing from each other only in an intrinsic marking embodied in the value assigned to a plurality of predetermined elements of said sequences according to whether the next sequence to be used will or will not be the same as the current sequence.

7. Digital signal receiver implementing the method according to any one of claims 1 to 5 comprising:
   - receiver and demodulator means (20) producing from the received signal a succession of complex elements (s(kT)),
- means (26) for producing sequences of successive complex elements ($C_j{}^*$) consisting of conjugate elements of homologous elements used at the transmitting end,
- means (27) for synchronising the sequences so used at the receiving end to the homologous sequences used at the transmitting end,
- means for multiplying the complex elements (s(kT)) obtained at the output of the demodulator by a corresponding sequences of successive complex elements so produced and synchronised, and
- summing means (28) for summing over the duration of an information symbol the resultant complex elements appearing during said duration to produce an estimate of the original information symbols used at the transmitting end,
    receiver characterised in that it further comprises:
- means (21, 22, 23, 24) for analysing the complex elements (s(kT)) obtained at the output of the demodulator to identify a marking embodied in the value assigned to a plurality of predetermined elements of said sequences introduced at the transmitting end, and
- selector means (25) controlled in response to the marking so identified in such a way as to retain the same sequence of conjugate complex elements or to change sequence, successive sequence changes occurring at random times determined by the receiver exclusively by analysing said markings but in a deterministic order known intrinsically to the receiver.

# FIG.1

$L/r$ symboles

$(D_s)$ Symbole $a_i$ | Symbole $a_{i+1}$ | Symbole $a_{i+L/R}$

$(D_c)$ r chips

$C_1 C_2 \cdots C_j \cdots C_r \; C_{r+1} \; C_{r+2}$ $\qquad\qquad C_{L-r+1} C_{L-r+2} \qquad C_L$

L chips

Symboles $a_i$
(débit $D_s$)

11

Symboles $s_i$
(débit $D_c$)

12

MODULATEUR

Chips $C_j$
(debit $D_c$)

CHANGEMENT
DE SEQUENCE

GENERATEUR
DE SEQUENCES

10

# FIG.2

EP 0 470 352 B1

FIG.3